(19) Europäisches Patentamt

European Patent Office

Office européen des brevets

(11) Veröffentlichungsnummer: **0 271 628**
**B1**

(12) # EUROPÄISCHE PATENTSCHRIFT

(45) Veröffentlichungstag der Patentschrift:
22.08.90

(21) Anmeldenummer: 86890343.6

(22) Anmeldetag: **17.12.86**

(51) Int. Cl.⁵: **C10L 5/40, C02F 11/00**

(54) Verfahren zur Herstellung eines Veredelungsproduktes aus Klärschlämmen.

(43) Veröffentlichungstag der Anmeldung:
22.06.88 Patentblatt 88/25

(45) Bekanntmachung des Hinweises auf die Patenterteilung:
22.08.90 Patentblatt 90/34

(84) Benannte Vertragsstaaten:
BE CH ES FR GB GR IT LI LU NL SE

(56) Entgegenhaltungen:
EP-A- 0 053 251
EP-A- 0 110 208
DE-A- 3 619 725
GB-A- 2 048 845
US-A- 3 506 414

(73) Patentinhaber: VOEST-ALPINE Aktiengesellschaft,
Friedrichstrasse 4, A-1011 Wien(AT)

(72) Erfinder: Wolkenstein, Robert, Ausseerstrasse 63,
A-8940 Liezen(AT)
Erfinder: Peer, Rudolf, Dipl.-Ing., Ausseerstrasse 61,
A-8940 Liezen(AT)

(74) Vertreter: Kretschmer, Adolf, Dipl.-Ing. et al,
Patentanwälte Dipl.Ing. A. Kretschmer Dr. Thomas M.
Haffner Schottengasse 3a, A-1014 Wien(AT)

# Beschreibung

Die Erfindung bezieht sich auf ein Verfahren zur Herstellung eines Veredelungsprodukts aus Klärschlämmen, insbesondere eines Brennstoffes oder Kompostzusatzes, bei welchem die Klärschlämme mit Flockungshilfsmitteln und Kohlenstoffträgern versetzt und einer Entwässerung unterworfen werden. Es ist bereits eine Reihe derartiger Verfahren bekannt geworden, welche insbesondere unter Verwendung bestimmter Entwässerungseinrichtungen konzipiert wurden. So ist beispielsweise aus der EP-A 53 251 ein Verfahren zur Entwässerung von Klärschlämmen bekannt geworden, bei welchem das Entwässerungsverhalten in einer Filterpresse durch Zugabe organischer Flockungshilfsmittel sowie von Zuschlagsstoffen verbessert wurde. Als Zuschlagsstoffe wurden in derartigen Verfahren bereits feinteilige Kohlen oder Aschen vorgeschlagen, wobei die Bemessung der entsprechenden Menge mit Rücksicht auf den nachfolgenden Entwässerungsprozeß gewählt werden mußte. Je nach Wahl der Entwässerungsvorrichtung, welche bei den bekannten Verfahren durchwegs als Filterpresse gewählt wurde, wurde zum Zweck der Verbesserung der Entwässerungsleistung derartiger Pressen eine entsprechende mechanische Stabilität der Zuschlagsstoffe gefordert. Durch derartige mineralische Filterhilfsmittel konnte bei den gewählten Entwässerungseinrichtungen die Entwässerungsleistung erhöht werden. Eine Optimierung im Hinblick auf eine nachfolgende Verwendung des entwässerten Produktes konnte jedoch gleichzeitig nicht erzielt werden. Teilweise wurden bei derartigen Verfahren hohe Anteile an inerten Entwässerungshilfsmitteln gefordert, welche bei einer nachfolgenden Verbrennung eine erhöhte Aschemenge zur Folge haben.

Die Erfindung zielt nun darauf ab, ein Veredelungsprodukt der eingangs genannten Art herzustellen, bei welchem die Zugabe von Kohlenstoffträgern in einer Weise erfolgt, welche die Entwässerungsleistung in keiner Weise beeinträchtigt und durch welche ein Endprodukt mit auf die nachfolgende Zweckbestimmung bzw. Verwendung ausgerichteten Eigenschaften erzielt werden kann. Zur Lösung dieser Aufgabe besteht die Erfindung im wesentlichen darin, daß die Entwässerung mittels einer Siebbandpresse auf einen TS-Anteil von wenigstens 15 Gew.-%, vorzugsweise wenigstens 20 Gew.-%, vorgenommen wird und daß zumindest der größte Teil der Gesamtzugabe eines Kohlenstoffträgers nach dieser Entwässerung in einem Mischer, insbesondere einer Zerkleinerungseinrichtung, erfolgt. Durch die Wahl einer Siebbandpresse als Entwässerungsvorrichtung besteht die Möglichkeit mit Flächen- oder Linienpressung Schlämme zu entwässern und auf diese Weise eine Anpassung an verschiedene Arten von Schlämmen vorzunehmen. Dadurch, daß in derartigen Siebbandpressen inerte Entwässerungshilfsmittel weitgehend entbehrlich sind, um zu hohen Entwässerungsleistungen zu gelangen, und die Zugabe zumindest des größeren Teiles der Gesamtzugabe eines Kohlenstoffträgers nach der Entwässerung erfolgt, können Zuschlagsstoffe und Kohlenstoffträger gewählt werden, welche beispielsweise die Flockenbildung durch Flockungshilfsmittel stören würden. Die Zugabe der Kohlenstoffträger nach der Entwässerung kann in unterschiedlichster Form erfolgen, da hier nicht auf die Entwässerungstechnologie Rücksicht genommen werden muß. Des weiteren kann eine nach der Entwässerung vorgenommene Zugabe von Kohlenstoffträgern tatsächlich auf den gewünschten Heizwert oder den gewünschten Anteil an biologischer abbaubarer Substanz abgestellt werden und es ist insbesondere möglich, bei einer derartigen nachträglich erfolgenden Zugabe von Kohlenstoffträgern gleichzeitig eine Reihe von Zuschlagsstoffen einzusetzen, welche vor einer Entwässerung nicht dazugegeben werden können. Dies gilt insbesondere für die bevorzugte Weiterbildung des erfindungsgemäßen Verfahrens, gemäß welchem zusätzlich zur, insbesondere gleichzeitig mit der, Kohlenstoffzugabe nach der Entwässerung eine Kalkzugabe in Form von $CaCO_3$, $CaO$ oder $Ca(OH)_2$ vorgenommen wird. Eine derartige Zugabe, welche mit einer Veränderung des pH-Wertes einhergeht, würde eine empfindliche Beeinträchtigung des Flockungsverhaltens bedeuten. Die Zugabe von Kohlenstoffträgern nach der Entwässerung erfolgt erfindungsgemäß in einem Mischer, insbesondere einer Zerkleinerungseinrichtung. Auf diese Weise wird eine Homogenisierung der Kohlenstoffträgerzugabe erreicht. Die Kohlenstoffzugabe bzw. Kohlenstoffträgerzugabe kann im Falle eines Verbesserungskonzentrates für die Kompostierung zur Begünstigung der Verrottung auf die Verbesserung des Stickstoff-Kohlenstoff-Verhältnisses abzielen. Im Falle der Herstellung eines brennbaren Produktes kann die Kohlenstoffzugabe so bemessen werden, daß eine Verbrennung ohne zusätzliches Energieeinbringen oder sogar eine Verbrennung unter Energieabgabe möglich ist. In jedem Fall kann als Kriterium für die gewählte Menge des Kohlenstoffträgers das gewünschte Ausgangsprodukt herangezogen werden, da auf die Entwässerungstechnologie keine Rücksicht genommen werden muß. Die nachträgliche Zugabe von Kohlenstoff nach einer Entwässerung auf relativ hohen Trockensubstanzgehalt befreit diese Zugabe vom Erfordernis einer bestimmten mechanischen Konsistenz bzw. Belastbarkeit des Kohlenstoffträgers und es können minderwertige Abfallstoffe zugesetzt werden.

Gegebenenfalls kann zusätzlich zu der nach dem Entwässerungsvorgang eingebrachten größeren Teilmenge des Kohlenstoffträgers bereits vor der Entwässerung Kohlenstoffträger zugesetzt werden. In bevorzugter Weise erfolgt eine Zugabe von Kohlenstoffträgern vor der Entwässerung in Form von flüssigen Kohlenstoffträgern insbesondere durch Aufsprühen.

In besonders einfacher Weise kann die Zugabe des Kohlenstoffträgers in Form von Kohleschlämmen, Kohlen- oder Koksstaub, entwässerten Stoffabfallschlämmen aus der Papierindustrie, Holzsplitt, Holzhobelspänen, Sägemehl, zerkleinerten Rindenabfällen, Altöl und/oder pflanzlichen und tierischen Abfallmassen erfolgen. Die gleichzeitig mit einer derartigen Kohlenstoffzugabe mögliche Zugabe von Kalk ist insbesondere für die selbstgängige Verbrennung oder die Verbrennung mit Energieüberschuß von Vorteil, da hier eine Entschwefelung beim Verbrennungsprozeß erzielt werden kann.

Der Zusatz von Kohlenstoffträgern nach dem Entwässerungsvorgang bietet neben den eingangs genannten Vorteilen auch noch den wesentlichen Vorteil, daß ein Mischvorgang mit einer weitgehend vorgetrockneten Substanz wesentlich leichter und homogener möglich ist als mit einem noch pastösen Schlammkuchen. Die Verwendung einer Siebbandpresse hat gegenüber anderen Entwässerungseinrichtungen den Vorteil, daß keine Mindestmenge eines Feststoffzusatzes vor dem Entwässerungsvorgang erforderlich ist, um eine preßfähige Schlammstruktur zu erhalten. Es kann daher beim Einsatz einer Siebbandpresse der Feststoffzusatz in einer Weise erfolgen, daß je nach der gewünschten Verwendung, beispielsweise im Fall eines brennbaren Produktes die Aschemenge minimiert wird und der Heizwert auf die gewünschten Werte eingestellt wird. Neben der Möglichkeit, die Gesamtmenge des Kohlenstoffträgers in Abhängigkeit vom gewünschten Heizwert des entwässerten Produktes vorzunehmen, besteht auch die Möglichkeit, die Korngröße bzw. den Zerkleinerungsgrad der festen Kohlenstoffmenge in Abhängigkeit vom Verwendungszweck einzustellen, wobei für die Kompostierung eine geringere Korngröße als für die Verbrennung gewählt wird.

Es hat sich als vorteilhaft herausgestellt, wenigstens 60 Gew.-%, vorzugsweise wenigstens 75 Gew.-%, der Gesamtmenge der Kohlenstoffzugabe nach der Entwässerung vorzunehmen.

Die als Zusatz in Frage kommenden festen Kohlenstoffträger werden mit Vorteil einer Zerkleinerung und einer Korngrößenklassierung unterworfen und es wird mit Vorteil für eine Zugabe vor der Entwässerung die Feinkornfraktion in einem gesonderten Mischer zugemengt.

Neben der Möglichkeit, gleichzeitig mit der Kohlenstoffzugabe in Hinblick auf die Entschwefelung Kalkzusätze beizumengen, besteht bei Verwendung einer Siebbandpresse der weitere Vorteil, daß Kalkmilch auf die Siebbandpresse selbst aufgesprüht werden kann oder $CaCO_3$ unmittelbar bei der Aufgabe auf die Siebbandpresse zugefügt werden kann. Die Kalkmilchzugabe hat hiebei insbesondere der pH-Einstellung für eine nachfolgende Kompostierung angepaßt zu werden, um auf diese Weise eine Neutralisierung von bei der Kompostierung entstehenden Huminsäuren zu erzielen. Es kann aber auch ein für eine Entschwefelung günstiger Anteil für die Kalkzugabe gewählt werden.

Die erfindungsgemäße Verfahrensweise erlaubt die weitgehende Anpassung des Endproduktes an die gewünschte Verwendung, was im Rahmen des erfindungsgemäßen Verfahrens durch die Kombination einer Siebbandpresse als Entwässerungsvorrichtung mit einer Zugabe des Kohlenstoffträgers zumindest was seine Hauptmenge anlangt nach einer derartigen Entwässerung erreicht wird. Die Verwendung einer Siebbandpresse hat darüberhinaus den wesentlichen Vorteil, daß mit einer derartigen Einrichtung relativ hohe Entwässerungsleistungen von 20 bis 30 Gew.-% Trockensubstanz ohne weiteres erzielt werden können und daher die Vermengung und Homogenisierung in einer Zerkleinerungsvorrichtung beim Zusatz des Kohlenstoffträgers ohne nennenswerte Schwierigkeiten vorgenommen werden kann.

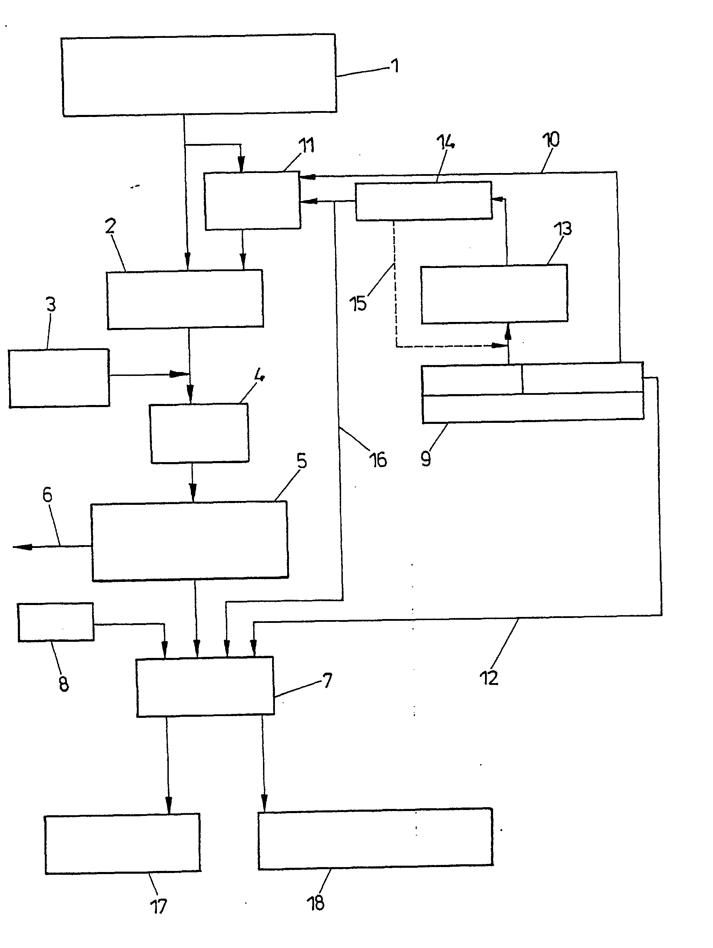

Die Erfindung wird nachfolgend an Hand eines in der Zeichnung dargestellten schematischen Flußdiagrammes näher erläutert.

In der Zeichnung ist mit 1 die Klärschlammaufgabe bezeichnet. Bei dem Klärschlamm kann es sich um Klärschlamm von Abwasseraufbereitungen für kommunale bzw. gewerbliche Abwässer handeln. Der Klärschlamm gelangt zunächst in einen Mischer 2, in welchem eine Homogenisierung vorgenommen wird. Aus einem Vorratsbehälter 3 werden Flockungsmittel zudosiert, worauf die erzielte Mischung einem Mischreaktor 4 zugeführt wird. Nach Einstellung der gewünschten Flockung wird das Produkt auf eine Siebbandpresse 5 mit einer Hochdrucknachentwässerungsstufe aufgebracht. Das Filtrat wird über eine Leitung 6 abgezogen. Im Anschluß an diese Entwässerung mittels der Siebbandpresse 5, mit welcher Trockensubstanzgehalte zwischen 15 und 25 Gew.-% ohne weiteres erzielt werden, gelangt der Kuchen in einen weiteren Mischer 7. Aus einem Vorratsbunker 8 wird der gewünschte Kalksatz in den Mischer 7 eingebracht, wobei der Mischer 7 als Zerkleinerungseinrichtung ausgebildet ist. Bei 9 werden feste und flüssige Kohlenstoffträger vorrätig gehalten. Flüssige Kohlenstoffträger können über eine Leitung 10 unmittelbar einem Vormischer 11 in Bypass zur Leitung zum Mischer 2 zugesetzt werden. Über eine Leitung 12 kann flüssiger Kohlenstoffträger dem Mischer 7 zugeführt werden. Die festen Kohlenstoffträger werden einer Zerkleinerung, welche mit 13 angedeutet ist, unterworfen und anschließend einer Klassierung, welche mit 14 bezeichnet ist, unterworfen. Überkorn kann über eine Leitung 15 rückgeführt werden und wird neuerlich der Zerkleinerung 13 zugeführt. Nach erfolgter Klassierung kann gewünschtenfalls ein Feinanteil dem Vormischer 11 oder aber der den jeweiligen Verwendungszwecken angepaßte Korngrößenbereich über eine Fördereinrichtung 16 dem Mischer 7 zugeführt werden. Das im Mischer 7 homogenisierte und zerkleinerte Material kann je nach dem gewünschten Verwendungszweck einer mit 17 schematisch angedeuteten Verbrennung oder einer mit 18 schematisch angedeuteten Müllkompostierung zur Verfügung gestellt werden.

**Patentansprüche**

1. Verfahren zur Herstellung eines Veredelungsproduktes aus Klärschlämmen, insbesondere eines Brennstoffes oder Kompostzusatzes, bei welchem die Klärschlämme mit Flockungshilfsmitteln und Kohlenstoffträgern versetzt und einer Entwässerung unterworfen werden, dadurch gekennzeichnet, daß die Entwässerung mittels einer Siebbandpresse (5) auf einen TS-Anteil von wenigstens 15 Gew.-%, vorzugsweise wenigstens 20 Gew.-%, vorgenommen wird und daß zumindest der größere Teil der Gesamtzugabe eines Kohlenstoffträgers (9) nach dieser Entwässerung in einem Mischer, insbesondere einer Zerkleinerungseinrichtung (7), erfolgt.

2. Verfahren nach Anspruch 1, dadurch gekennzeichnet, daß eine bereits vor der Entwässerung erfolgende Zugabe von Kohlenstoffträgern (9) in Form von flüssigen Kohlenstoffträgern insbesondere durch Aufsprühen erfolgt.

3. Verfahren nach Anspruch 1 oder 2, dadurch gekennzeichnet, daß zusätzlich zur, insbesondere gleichzeitig mit der, Kohlenstoffzugabe nach der Entwässerung eine Kalkzugabe (8) in Form von CaCO₃, CaO oder Ca(OH)₂ vorgenommen wird.

4. Verfahren nach Anspruch 1, 2 oder 3, dadurch gekennzeichnet, daß die Zugabe des Kohlenstoffträgers (9) in Form von Kohleschlämmen, Kohlen- oder Koksstaub, entwässerten Stoffabfallschlämmen aus der Papierindustrie, Holzsplitt, Holzhobelspänen, Sägemehl, zerkleinerten Rindenabfällen, Altöl und/oder pflanzlichen und tierischen Abfallmassen erfolgt.

5. Verfahren nach einem der Ansprüche 1 bis 4, dadurch gekennzeichnet, daß nach der Entwässerung (5) wenigstens 60 Gew.-%, vorzugsweise wenigstens 75 Gew.-%, der Gesamtmenge der Kohlenstoffzugabe zugesetzt wird.

6. Verfahren nach einem der Ansprüche 1 bis 5, dadurch gekennzeichnet, daß die festen Kohlenstoffträger (9) einer Zerkleinerung (13) und einer Korngrößenklassierung (14) unterworfen werden und für eine Zugabe vor der Entwässerung die Feinkornfraktion in einem gesonderten Mischer (11) zugemengt wird.

7. Verfahren nach einem der Ansprüche 1 bis 6, dadurch gekennzeichnet, daß die Gesamtmenge des Kohlenstoffträgers (9) in Abhängigkeit vom gewünschten Heizwert des entwässerten Produktes erfolgt.

8. Verfahren nach einem der Ansprüche 1 bis 7, dadurch gekennzeichnet, daß die Korngröße bzw. der Zerkleinerungsgrad der festen Kohlenstoffträger (9) in Abhängigkeit vom Verwendungszweck eingestellt wird, wobei für die Kompostierung eine geringere Korngröße als für die Verbrennung gewählt wird.

## Claims

1. A process for producing a processing product from sewage sludges, in particular a fuel or compost additive, in which the sewage sludges are mixed with flocculants and carbon carriers and are subjected to dewatering, characterised in that the dewatering is carried out by means of a screen belt press (5) to a dry substance proportion of at least 15% by weight, preferably at least 20% by weight, and in that at least the majority of the total addition of a carbon carrier (9) after this dewatering takes place in a mixer, in particular a comminuting device (7).

2. A process according to Claim 1, characterised in that an addition of carbon carriers (9) in the form of liquid carbon carriers is carried out prior to the dewatering, in particular by spraying.

3. A process according to Claim 1 or 2, characterised in that additionally to and, in particular, simultaneously with the addition of carbon carriers, an addition of lime (8) in the form of CaCO₃, CaO or Ca(OH)₂ is carried out after the dewatering.

4. A process according to Claim 1, 2 or 3, characterised in that there is is carried out the addition of the carbon carrier (9) in the form of carbon sludges, coal or coke dust, dewatered pulp waste sludges from the paper industry, wood chippings, wood planing shavings, sawdust, comminuted bark waste, used oil and/or vegetable and animal waste materials.

5. A process according to any one of Claims 1 to 4, characterised in that, after the dewatering (5), at least 60% by weight, preferably at least 75% by weight of the total amount of added carbon, is added.

6. A process according to any one of Claims 1 to 5, characterised in that the solid carbon carriers (9) are subjected to comminution (13) and particle size classification (14) and, for an addition prior to the dewatering, the fine-grained fraction is mixed in a separate mixer (11).

7. A process according to any one of Claims 1 to 6, characterised in that the total amount of the carbon carrier (9) takes place [sic] as a function of the desired calorific value of the dewatered product.

8. A process according to any one of Claims 1 to 7, characterised in that the particle size and/or the degree of comminution of the solid carbon carriers (9) is adjusted as function of the intended application, a smaller particle size being chosen for composting than for combustion.

## Revendications

1. Procédé de fabrication d'un produit amélioré à partir de boues résiduaires, en particulier d'un combustible ou d'un additif de compost, dans lequel on ajoute des adjuvants de floculation et des supports de carbone aux boues résiduaires et on soumet les boues résiduaires à une déshydratation, caractérisé en ce que la déshydratation est réalisée au moyen d'une presse à guide-toile perforée (5) jusqu'à une concentration en matières sèches d'au moins 15% en poids, de préférence au moins 20% en poids, et en ce qu'au moins la majeure partie de l'apport total d'un support de carbone (9) s'effectue après cette déshydratation dans un mélangeur, en particulier, un dispositif de broyage (7).

2. Procédé selon la revendication 1, caractérisé en ce qu'un apport de supports de carbone (9) déjà effectué avant l'hydratation s'effectue sous la forme de support liquide de supports de carbone, en particulier par arrosage.

3. Procédé selon la revendication 1 ou 2, caractérisé en ce que l'on possède à un apport de calcaire (8) sous la forme de CaCO₃, CaO ou Ca(OH)₂ en supplément à l'apport de carbone, en particulier simultanément avec l'apport de carbone.

4. Procédé selon la revendication 1, 2 ou 3, caractérisé en ce que l'apport du support de carbone (9) s'effectue sous la forme de boues de charbon, poussières de charbon ou de coke, boues résiduaires déshydratées provenant de l'industrie du papier, éclats de bois, copeaux de bois, sciure, chutes d'écorce broyées, huiles usagées et/ou masses de déchets végétaux et/ou animaux.

5. Procédé selon l'une des revendications 1 à 4, caractérisé en ce que, après la déshydratation (5), on additionne au moins 60% en poids, de préférence au moins 75% en poids, de la masse totale de l'apport de carbone.

6. Procédé selon l'une des revendications 1 à 5, caractérisé en ce que les supports solides de carbone (9) sont soumis à un concassage (13) et à un triage (14) selon la grosseur des grains et en ce que, en vue d'une addition avant l'hydratation, la fraction de grains fins est ajoutée dans un mélangeur particulier (11).

7. Procédé selon l'une des revendications 1 à 6, caractérisé en ce que la masse totale du support de carbone (9) est déterminée en fonction de la valeur de chauffage désirée du produit déshydraté.

8. Procédé selon l'une des revendications 1 à 7, caractérisé en ce que la grosseur des grains ou le degré de concassage des supports solides de carbone (9) est réglé en fonction de l'utilisation, en choisissant une grosseur de grains plus faible pour le compostage que pour la combustion.